# EUROPÄISCHE PATENTSCHRIFT

(11) **EP 0 432 746 B1**
(45) Veröffentlichungstag und Bekanntmachung des Hinweises auf die Patenterteilung: **15.11.1995**
(21) Anmeldenummer: 90123869.1
(22) Anmeldetag: 11.12.1990
(51) Int. Cl.: H04M 1/57, H04M 1/274

(54) **Telekommunikations-Endgerät**
Telecommunications terminal
Terminal de telecommunication

(30) Priorität: 13.12.1989 DE 3941161
(43) Veröffentlichungstag der Anmeldung: 19.06.1991
(73) Patentinhaber: SIEMENS AKTIENGESELLSCHAFT, 80333 München (DE)
(72) Erfinder: Lubcke, Hartmut, W-8000 München 19 (DE); Kremer, Peter, W-8000 München 40 (DE); Schaumburger, Fritz, W-8000 München 2 (DE)

(56) Entgegenhaltungen:
- DE-A- 3 128 529
- US-A- 4 304 968
- ERICSSON REVIEW Bd. 65, Nr. 4, 1988, STOCKHOLM SE Seiten 144 - 151; KILANDER ET AL: 'BCS 150 A DIGITAL BUSINESS COMMUNICATIONS SYSTEM'
- PHILIPS TELECOMMUNICATION REVIEW Bd. 40, Nr. 4, Dezember 1982, HILVERSUM NL Seiten 327 - 336; JANSEN: 'KT 20 MULTI-FUNCTION TELEPHONE TERMINALS'
- PTR PHILIPS TELECOMMUNICATION AND DATA SYSTEMS REVIEW Bd. 48, Nr. 1, März 1990, HILVERSUM NL Seiten 20 - 27; BOLTJES: 'FACILITIES FOR USERS OF SOPHO-SET FEATURE PHONES'
- Philips TDS Review, Vol.47, Nr.1, März 89, Seiten 1-14; C.M.Klik: "The SOPHO-SET family of digital telephone terminals for SOPHO-S PABXs"

## Beschreibung

Die Erfindung betrifft ein Telekommunikations-Endgerät mit Zielwahltasten und zugeordnetem Rufnummernspeicher für eine Telekommunikationsanlage, in der die Rufnummer eines rufenden Teilnehmers zu dem Endgerät des gerufenen Teilnehmers übertragen wird.

Ein Telekommunikations-Endgerät dieser Art ermöglicht einerseits die Zielwahl, bei der durch Betätigen einer Zielwahltaste, die z.B. mit dem Namen eines Teilnehmers versehen ist, eine in dem Rufnummernspeicher gespeicherte Rufnummer automatisch gewählt wird. Andererseits ermöglicht es auch eine Anzeige der Rufnummer eines rufenden Teilnehmers, da diese zu dem Endgerät des gerufenen Teilnehmers übertragen wird.

Bei dem ISDN-Telekommunikationssystem besteht eines der vorgesehenen Dienstmerkmale in einer Anruferliste, die in der Vermittlungseinrichtung vorgesehen ist und in die ein rufender Teilnehmer seine Rufnummer eintragen kann, sofern er den gerufenen Teilnehmer nicht erreicht. Der gerufene Teilnehmer kann die Anruferliste abfragen und feststellen, welche anderen Teilnehmer eine Verbindung mit ihm gewünscht haben. Diese Abfrage ist nur in zeitlicher Reihenfolge der Einträge in die Anruferliste möglich. Die Eintragung des Namens eines rufenden Teilnehmers ist nicht vorgesehen.

In dem Artikel Klik, C.M.: "The SOPHO-SET family ...", Philips TDS-review, Vol. 47, Nr. 1, März 89, Seiten 1 bis 14 sowie in dem Artikel Boltjes, C.J.: "Facilities for users of SOPHO-SET feature phones", Philips TDS-review, Vol. 48, Nr. 1, März 90, Seiten 20 bis 26 ist jeweils ein Telekommunikationsendgerät für eine Telekommunikationsanlage beschrieben, in der die Rufnummer eines rufenden Teilnehmers zu dem Endgerät des gerufenen Teilnehmers übertragen wird. In diesem Endgerät ist eine Rufnummerndatei enthalten, in der einzelnen Rufnummern Teilnehmernamen zugeordnet sind. Das beschriebene Endgerät speichert bei jedem erfolglos eingehenden Anruf die Nummer des erfolglos rufenden Teilnehmers in Verbindung mit dem Zeitpunkt des Anrufversuchs. Unabhängig von diesem Speichervorgang wird, falls die Nummer des Anrufers in der Datei einem Namen zugeordnet ist, dieser Name ebenfalls gespeichert und bei Anfrage angezeigt. Das beschriebene Endgerät ist hierbei mit einem Mikroprozessor, Programmspeicher und Arbeitsspeicher ausgestattet.

Aufgabe der vorliegenden Erfindung ist es, auf einfache Weise an einem Telekommunikationsendgerät erfolglose Anrufversuche von für den Teilnehmer des Telekommunikationsendgerätes wichtigen Teilnehmern anzuzeigen.

Diese Aufgabe wird gelöst durch ein Telekommunikationsendgerät mit den Merkmalen des Patentanspruches 1. Günstige Ausgestaltungen sind Gegenstand von Unteransprüchen.

Wenn die Rufnummer eines rufenden Teilnehmers zu dem Endgerät des gerufenen Teilnehmers übertragen wird, so kann sie bei einem Telekommunikations-Endgerät nach der Erfindung in bisher bekannter Weise angezeigt werden. Gleichzeitig wird sie aber auch zum Erzeugen eines Schaltkriteriums genutzt, mit dem die Anzeigevorrichtung aktiviert wird. Dieses Schaltkriterium wird dann erzeugt, wenn die zum Endgerät übertragene Rufnummer des rufenden Teilnehmers mit einer der in dem Rufnummernspeicher dieses Endgeräts enthaltenen Rufnummern übereinstimmt. Wenn der Zielwahltaste, die der gespeicherten Rufnummer zugeordnet ist, ihrerseits eine Anzeigevorrichtung zugeordnet ist, so kann diese bei positivem Vergleichsergebnis aufgrund der Zuordnung zwischen Zielwahltaste und gespeicherter Rufnummer ausgewählt und aktiviert werden. Auf diese Weise findet der gerufene Teilnehmer nach Eingehen erfolgloser Anrufe ein Endgerät vor, bei dem eine oder mehrere Zielwahltasten durch die aktivierte Anzeigevorrichtung markiert sind, so daß der Teilnehmer die unmittelbare Information über den Namen des jeweils rufenden Teilnehmers erhält und gegebenenfalls Rückrufe durch Betätigen der Zielwahltasten oder aber auch durch direktes Wählen ausführen kann. Durch das Betätigen der Zielwahltasten können die entsprechenden aktivierten Anzeigevorrichtungen wieder gelöscht werden.

Eine Anzeigevorrichtung kann mehreren Zielwahltasten zugeordnet sein. In diesem Fall muß die Eindeutigkeit der Anzeige für die jeweilige Zielwahltaste durch unterschiedlichen Anzeigezustand der Anzeigevorrichtung gewährleistet sein. Beispielsweise kann eine Anzeigelampe für zwei Zielwahltasten mit unterschiedlicher Helligkeit betrieben werden oder mit unterschiedlicher Frequenz intermittierend geschaltet werden. Vorteilhaft ist jedoch jeder Zielwahltaste eine Anzeigevorrichtung zugeordnet. Dann entspricht der Umfang der möglichen Namenskennzeichnungen der Anzahl durch die Zielwahl er reichbarer Teilnehmer, und die Markierung der jeweiligen Zielwahltaste ist eindeutig.

Eine gemeinsame Anzeigevorrichtung kann allen Zielwahltasten zugeordnet sein und bei einem positiven Vergleichsergebnis aktiviert werden. Ihr ist dann eine Taste zugeordnet, durch deren Betätigung die gespeicherte Auswahl der Aktivierung der einer Zielwahltaste zugeordneten Anzeigevorrichtung freigegeben wird. Durch diese Weiterbildung der Erfindung wird die Ruhestromaufnahme des Telekommunikations-Endgeräts minimal gehalten, denn zunächst ist nur die gemeinsame Anzeigevorrichtung aktiviert. Bei Überprüfung des Endgeräts kann der Teilnehmer die der gemeinsamen Anzeigevorrichtung zugeordnete Taste betätigen und erhält dann die vollständige Information über die Namen aller während seiner Abwesenheit rufenden Teilnehmer, die durch seine Zielwahltasten erfaßt sind.

Wenn das Telekommunikations-Endgerät Teil einer Fernsprech-Nebenstellenanlage ist, so können für die Zielwahl gespeicherte Rufnummern gegenüber ihnen entsprechenden, von einem rufenden Teilnehmer aus übertragenen Rufnummern unterschiedlich sein, denn in Nebenstellenanlagen werden den Rufnummern bei der Wahl externer Teilnehmer besondere Ziffern vorangestellt, mit denen der Zugang in das öffentliche Fernsprechnetz möglich ist. Solche Ziffern werden bei der Übertragung der Rufnummer eines rufenden Teilnehmers nicht mit übertragen, so daß bei dem erfindungsgemäß vorgesehenen Vergleich zweier Rufnummern kein positives Vergleichsergebnis möglich wäre, auch wenn die verglichenen Rufnummern ein und demselben Teilnehmer zugeordnet sind. Um eine entsprechende Fehlfunktion zu vermeiden, ist das Endgerät in weiterer Ausbildung des Erfindungs gedankens derart aufgebaut, daß der Vergleich hinsichtlich der Stellenzahl zweier Rufnummern und danach hinsichtlich der Stellenwerte einer vorbestimmten Anzahl einander entsprechender Stellen erfolgt, welche die Endabschnitte der zu vergleichenden Rufnummern bilden.

Bei dieser Weiterbildung ist es möglich, den Vergleich der beiden Rufnummern mit Abschnitten übereinstimmender Länge durchzuführen, so daß eine der einen Rufnummer vorangestellte Ziffer oder Ziffernfolge in den Vergleich nicht einbezogen wird. Dadurch wird ein positives Vergleichsergebnis auch dann erhalten, wenn sich zwei zu vergleichende Rufnummern durch eine vorangestellte Ziffer unterscheiden oder wenn eine für die Zielwahl gespeicherte Rufnummer eine sogenannte Codewahl-Rufnummer ist, deren entsprechende vollständige Rufnummer in der Zentrale der Nebenstellenanlage gespeichert ist.

Wenn bei der zuletzt beschriebenen Weiterbildung der Erfindung nur relativ kurze Endabschnitte zweier Rufnummern miteinander verglichen werden, um z.B. vorangestellte Codewahl-Rufnummernabschnitte nicht in den Vergleich einzubeziehen, so kann ein positives Vergleichsergebnis möglicherweise auch dann entstehen, wenn die verglichenen Rufnummern in dem nicht in den Vergleich einbezogenen Abschnitt unterschiedlich sind, in den miteinander verglichenen Abschnitten jedoch übereinstimmen. Um dennoch durch das Betätigen der dann falsch markierten Zielwahltaste den richtigen Teilnehmer zu erreichen, wird in einer Weiterbildung der Erfindung bei positivem Vergleichsergebnis die übertragene Rufnummer gespeichert. Diese kann dann bei Betätigung der falsch markierten Zielwahltaste anstelle der dieser zugeordneten gespeicherten Rufnummer ausgegeben werden.

Die Erfindung wird im folgenden an Hand der Zeichnung näher erläutert. Darin zeigen:
- Fig. 1: die Draufsicht auf ein Telekommunikations-Endgerät,
- Fig. 2: eine Blockdarstellung des für die Erfindung relevanten Teils der Steuerung des Endgeräts nach Fig. 1,
- Fig. 3: Darstellungen von Rufnummern und Zielwahlnummern und
- Fig. 4: das Flußdiagramm des Ablaufs eines Vergleichsvorgangs für Zielwahlnummern und empfangene Rufnummern.

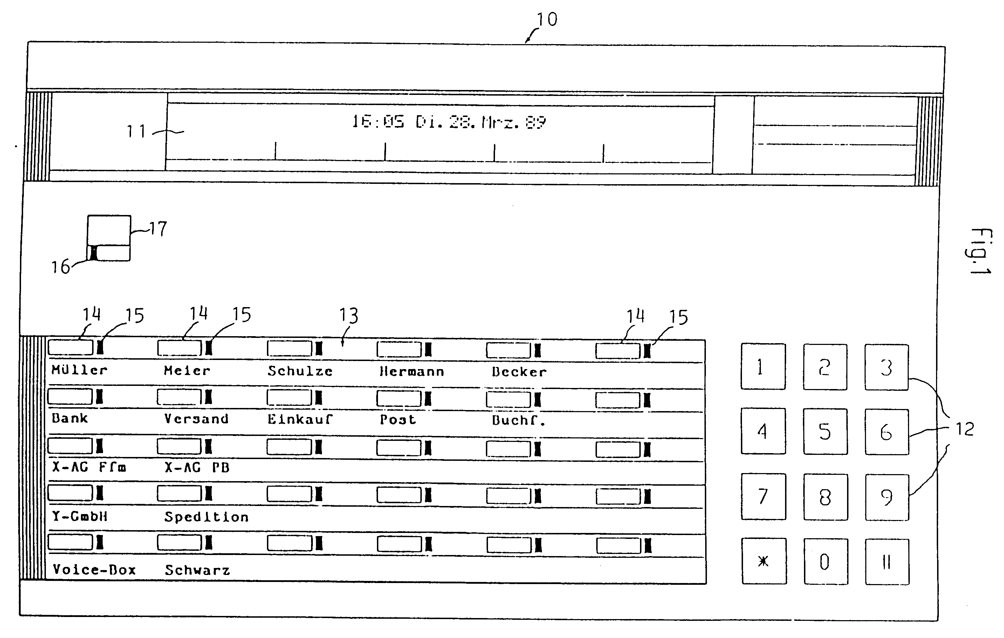

In Fig. 1 ist die Oberseite eines Telekommunikations-Endgeräts 10 dargestellt. Dieses enthält im wesentlichen ein Anzeigefeld 11 für den Verbindungsaufbau zu einem anderen Endgerät betreffende Informationen, eine numerische Tastatur 12 zum Eingeben von Wählinformationen sowie ein Zielwahltastenfeld 13 mit Zielwahltasten 14, denen jeweils eine Anzeigevorrichtung 15 zugeordnet ist. Die Zielwahltasten 14 sind mit Namen versehen, soweit sie mit Zielwahlnummern belegt sind. Beim Betätigen einer der Zielwahltasten 14 wird automatisch eine in einem Rufnummernspeicher enthaltene Zielwahlnummer von dem Endgerät 10 ausgegeben.

Auf der linken Seite der Deckfläche des Endgeräts 10 ist zwischen dem Anzeigefeld 11 und dem Zielwahltastenfeld 13 eine Anzeigevorrichtung 16 angeordnet, der eine Taste 17 zugeordnet ist.

Die Anzeigevorrichtungen 15 und 16 können zum Beispiel Leuchtdioden oder bistabile Anzeigevorrichtungen sein, wie sie für Endgeräte dieser Art an sich bekannt sind. Die Erfindung sieht vor, daß beim Eingehen von Anrufen, die nicht beantwortet werden, jeweils eine Anzeigevorrichtung 15 aktiviert wird, sofern der Anrufer identisch ist mit dem Teilnehmer, dem die entsprechende Zielwahltaste 14 zugeordnet ist. Der Teilnehmer des in Fig. 1 gezeigten Endgeräts 10 kann dann unmittelbar erkennen, welche der Zielwahlteilnehmer in seiner Abwesenheit einen Verbindungswunsch hatten, und kann gegebenenfalls durch Betätigen der entsprechenden Zielwahltasten 14 Rückrufe vornehmen, wodurch die jeweilige Anzeigevorrichtung auch wieder gelöscht werden kann.

Die Anzeigevorrichtung 16 ist allen Zielwahltasten 14 zugeordnet und kann so gesteuert werden, daß sie als einzige Anzeigevorrichtung aktiviert ist, wenn mindestens ein erfolgloser Anruf eingegangen ist. Durch Betätigen der ihr zugeordneten Taste 17 wird dann in noch zu beschreibender Weise die Aktivierung derjenigen Anzeigen 15 veranlaßt, die den Zielwahltasten 14 für die rufenden Teilnehmer zugeordnet sind.

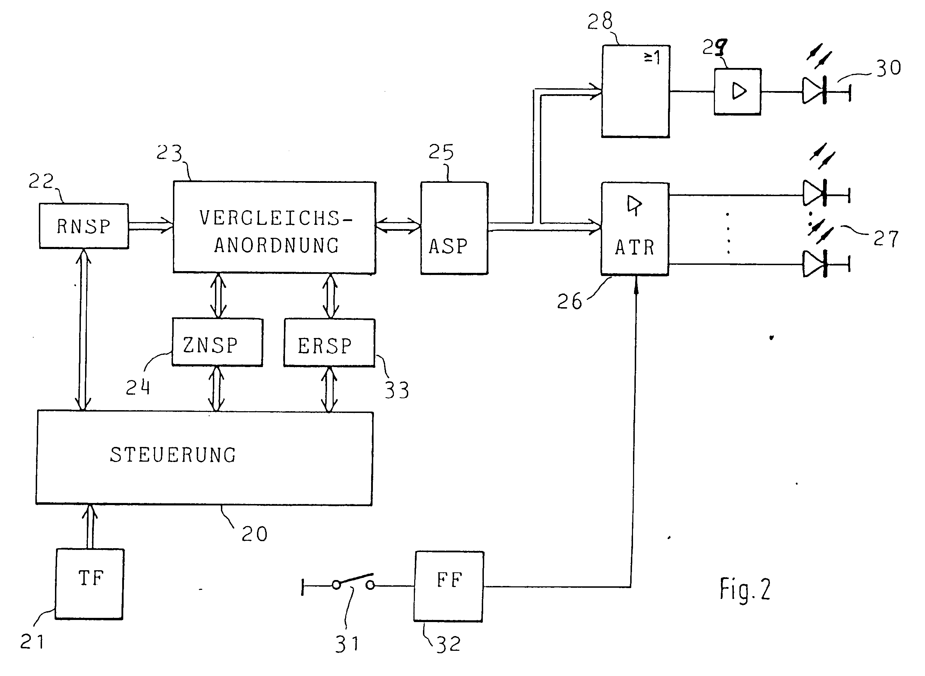

Fig. 2 zeigt in einer Blockdarstellung die Steuereinrichtung für den Teil des Endgeräts 10, der für die Erfindung wesentlich ist. Eine zentrale Steuerung 20 erhält Informationen von den Tastenfeldern des Endgeräts 10, die in Fig. 2 als Einheit TF mit 21 bezeichnet sind. Die Steuerung 20 trägt die Rufnummer eines anrufenden Teilnehmers, die zu dem Endgerät 10 übertragen wird, in einen Rufnummernspeicher 22 ein, aus dem sie von einer Vergleichsanordnung 23 ausgelesen wird. Die Vergleichsanordnung 23 vergleicht die jeweils ausgelesene Rufnummer mit den in einem Zielwahlnummernspeicher 24 enthaltenen Zielwahlnummern und steuert bei positivem Vergleichsergebnis einen Anzeigespeicher 25 mit einer Adresseninformation an, die aus der Adresse der das positive Vergleichsergebnis verursachenden Zielwahlnummer in dem Zielwahlnummernspeicher 24 abgeleitet ist. Dadurch kann mit einem Anzeigetreiber 26 eine von mehreren Leuchtdioden 27 angesteuert werden, die als Anzeigevorrichtung der Zielwahltaste 14 (Fig. 1) zugeordnet ist, deren Zielwahlnummer zu dem positiven Vergleichsergebnis geführt hat. Die Aktivierung dieser Leuchtdiode 27 kann später durch Betätigen der zugeordneten Zielwahltaste wieder gelöscht werden.

Die in Fig. 2 gezeigte Steuereinrichtung enthält zusätzliche Einheiten, mit denen eine allen Zielwahltasten 14 zugeordnete Leuchtdiode 30 aktiviert werden kann. Hierzu wird von dem Anzeigespeicher 25 auch ein ODER-Glied 28 angesteuert, dessen Ausgangssignal einem weiteren Anzeigetreiber 29 zugeführt wird, welcher die Leuchtdiode 30 aktiviert. Der mit der Leuchtdiode 30 versehenen Anzeigevorrichtung 16 (Fig. 1) ist die Taste 17 zugeordnet, welche mit einem Tastenkontakt 31 ausgerüstet ist. Wird dieser geschlossen, so wird ein Flip-Flop 32 gesetzt, welches an den Anzeigetreiber 26 ein Freigabesignal abgeben kann, so daß dieser in beschriebener Weise eine oder mehrere der Leuchtdioden 27 aktiviert.

Wird der Tastenkontakt 31 nochmals betätigt, so wird das Flip-Flop 32 rückgesetzt und das Freigabesignal für den Anzeigetreiber 26 beseitigt, so daß dieser wieder gesperrt wird und die zuvor aktivierten Leuchtdioden 27 gelöscht werden.

Es ist ferner ein Rufnummernspeicher 33 für empfangene Rufnummern vorgesehen, in den jede bei einem erfolglosen Anruf empfangene Rufnummer eingespeichert wird, sofern sie zu einem positiven Vergleichsergebnis geführt hat. Dies macht es möglich, bei einer weiter oben beschriebenen falschen Markierung einer Zielwahltaste bei Rückruf und Betätigen dieser Zielwahltaste dennoch den richtigen Teilnehmer zu erreichen.

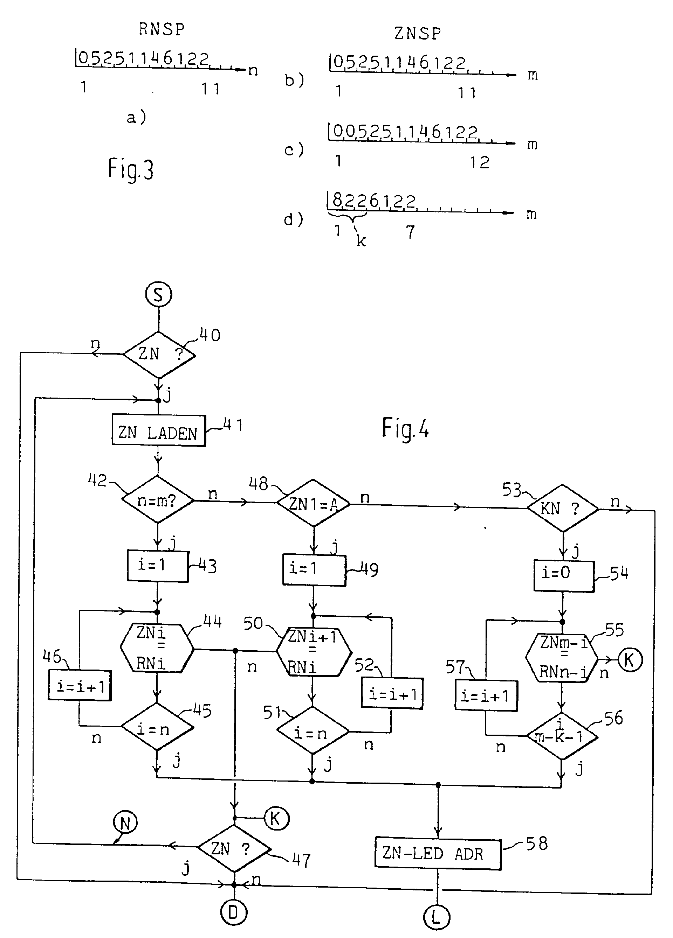

In Fig. 3a ist eine Rufnummer dargestellt, die aus elf Stellen n besteht und in dem Rufnummernspeicher 22 (Fig. 2) enthalten ist. Fig. 3b bis d zeigen drei verschiedene Möglichkeiten der Speicherung dieser Rufnummer in dem Zielwahlnummernspeicher 24 (Fig. 2). Bei der in Fig. 3b gezeigten Möglichkeit stimmt die im Zielwahlnummernspeicher 24 enthaltene Zielwahlnummer mit der Rufnummer gemäß Fig. 3a hinsichtlich Stellenzahl m und der Stellenwerte überein. Fig. 3c zeigt dieselbe Zielwahlnummer mit zwölf Stellen m, die dadurch entstehen, daß der Zielwahlnummer eine weitere Null vorangestellt ist, mit der üblicherweise der Zugang aus einer Nebenstellenanlage zum öffentlichen Fernsprechnetz möglich ist. Fig. 3d zeigt den letzten Abschnitt der Zielwahlnummer nach Fig. 3b und c mit den letzten vier Stellen, und diesen ist eine k-stellige Codewahlnummer vorangestellt, so daß die insgesamt gespeicherte Zielwahlnummer sieben Stellen hat.

Für die drei Speichermöglichkeiten einer Zielwahlnummer, die in Fig. 3b bis d dargestellt sind, muß bei einem Vergleich mit der in Fig. 3a gezeigten Rufnummer, die in dem Endgerät 10 (Fig. 1) bei einem Anruf empfangen wird, in der Vergleichsanordnung 23 (Fig. 2) stets ein positives Vergleichsergebnis entstehen. Wie dies funktionell erreicht wird, ist in Fig. 4 dargestellt.

Fig. 4 zeigt das Flußdiagramm der Abläufe in der Vergleichsanordnung 23 (Fig. 2) für drei verschiedene Vergleichsvorgänge. Zunächst wird der linke Zweig dieses Flußdiagramms erläutert. Die dort dargestellte Routine wird durch die Steuerung 20 (Fig. 2) gestartet, und in einem ersten Schritt 40 wird festgestellt, ob eine Zielwahlnummer ZN in dem Zielwahlnummernspeicher 24 (Fig. 2) enthalten ist. Ist dies nicht der Fall, so wird diese Routine wieder verlassen (D). Ist mindestens eine Zielwahlnummer in dem Zielwahlnummernspeicher 24 enthalten, so wird in Schritt 41 das Laden der ersten Zielwahlnummer in die Vergleichsanordnung 23 veranlaßt. Danach wird mit Schritt 42 in der Vergleichsanordnung 23 geprüft, ob die Stellenzahl n der empfangenen Rufnummer, die von dem Rufnummernspeicher 22 in die Vergleichsanordnung 23 eingegeben wurde, mit der Stellenzahl m der geladenen Zielwahlnummer übereinstimmt. Ist dies nicht der Fall, so wird in eine mit Schritt 48 beginnende und noch zu beschreibende Routine abgezweigt. Wenn Übereinstimmung festgestellt wird, so wird in Schritt 43 ein Schleifenzähler initialisiert (i=1), der die einzelnen Stellen der miteinander zu vergleichenden Rufnummern abzählt. In einer Schleife, die aus den folgenden Schritten 44, 45 und 46 besteht, wird der stellenweise Vergleich der Zielwahlnummer mit der empfangenen Rufnummer vorgenommen. In Schritt 44 wird geprüft, ob die jeweiligen beiden gleichwertigen Stellen der beiden zu vergleichenden Rufnummern hinsichtlich ihres Wertes übereinstimmen. Wenn dies zutrifft, so wird in Schritt 45 geprüft, ob die letzte Stelle der beiden zu vergleichenden Rufnummern erreicht ist oder nicht. Ist dies nicht der Fall, so wird in Schritt 46 der Schleifenzähler um einen Schritt weitergeschaltet (i=i+1), so daß die nächste Stelle der beiden Rufnummern dem Vergleich unterzogen wird. Wenn nach mehrmaligem Durchlauf der beschriebenen Schleife die letzte Stelle der beiden zu vergleichenden Rufnummern erreicht ist (i=n), so wird zu Schritt 58 übergeleitet, in dem der Anzeigespeicher 25 (Fig. 2) angesteuert wird, um die der dem Vergleich unterzogenen Zielwahlnummer entsprechende Anzeigevorrichtung 27 (Fig. 2) zu adressieren und dann über den Anzeigetreiber 26 zu aktivieren. Mit diesem positiven Vergleichsergebnis ist die in Fig. 4 links gezeigte Routine beendet (L).

Wenn in Schritt 44 festgestellt wird, daß die beiden miteinander zu vergleichenden Rufnummern an einer ihrer Stellen nicht übereinstimmen, so wird auf Schritt 47 übergegangen, in dem geprüft wird, ob eine weitere Zielwahlnummer in dem Zielwahlnummernspeicher 24 enthalten ist. Trifft dies zu, so wird auf Schritt 41 übergegangen (N). Ist keine weitere Zielwahlnummer in dem Zielwahlnummernspeicher 24 enthalten, so wird die Routine verlassen (D).

In Schritt 42 wurde festgestellt, ob die Stellenzahl der beiden zu vergleichenden Rufnummern übereinstimmt. Stimmt sie nicht überein, so wird auf Schritt 48 übergegangen, in dem festgestellt wird, ob die erste Stelle der in die Vergleichsanordnung 23 (Fig. 2) geladenen Zielwahlnummer einen Wert hat, der z.B. eine Amtszugangsziffer darstellt. Ist dies der Fall, so wird in Schritt 49 der Schleifenzähler initialisiert (i=1). Danach wird eine Schleife mit den Schritten 50, 51 und 52 gegebenenfalls mehrmals durchlaufen, die der bereits beschriebenen Schleife der Schritte 44, 45 und 46 entspricht. Dabei wird jedoch in Schritt 50 die Prüfung, ob eine Stelle der Zielwahlnummer mit einer Stelle der empfangenen Rufnummer übereinstimmt, um einen Schritt verschoben durchgeführt, so daß dadurch die vorangestellte Amtszugangsziffer unberücksichtigt bleibt. Bei positivem Vergleichsergebnis am Schluß der Schleifendurchläufe wird wiederum auf Schritt 58 übergegangen, wo der Anzeigespeicher 25 in beschriebener Weise angesteuert wird.

Wenn in Schritt 50 festgestellt wird, daß zwei miteinander verglichene Stellen der beiden Rufnummern nicht übereinstimmen, so wird auf Schritt 47 übergegangen (K), bei dem geprüft wird, ob eine weitere Zielwahlnummer in dem Zielwahlnummernspeicher 24 enthalten ist. Wie beschrieben, wird abhängig vom Ergebnis dieser Prüfung entweder zu Schritt 41 übergegangen (N) oder aber die Routine verlassen (D).

Wenn in Schritt 48 festgestellt wird, daß die erste Stelle der dem Vergleich zu unterziehenden Zielwahlnummer nicht die Amtsausscheidungsziffer ist, so wird auf Schritt 53 übergegangen, wo geprüft wird, ob die ersten k Stellen der in die Vergleichsanordnung 23 (Fig. 2) geladenen Zielwahlnummer eine Codewahlnummer bilden. Ist dies nicht der Fall, so wird die Routine verlassen (D). Handelt es sich um eine Codewahlnummer, so wird in Schritt 54 der Schleifenzähler initialisiert (i=0), d.h. in seine Nullstellung gebracht. Danach wird eine Schleife mit den Schritten 55, 56 und 57 durchlaufen, die der bereits beschriebenen Schleife der Schritte 44, 45 und 46 entspricht. Dabei wird in Schritt 55 mit der letzten Stelle der beiden zu vergleichenden Rufnummern begonnen, was durch den Index m-i bzw. n-i gekennzeichnet ist. Bei stellenweise positivem Vergleichsergebnis wird in Schritt 56 geprüft ob die letzte Stelle des dem Vergleich unterzogenen Endabschnitts der Zielwahlnummer erreicht ist, d.h. ob i=m-k-1 ist. Trifft dies nicht zu, so wird die Schleife erneut durchlaufen, indem in Schritt 57 der Schleifenzähler jeweils um einen Schritt weitergeschaltet wird. Wenn die letzte Stelle erreicht ist, so wird zu Schritt 58 übergegangen, bei dem in beschriebener Weise der Anzeigespeicher 25 angesteuert wird.

Wenn in Schritt 55 festgestellt wird, daß die beiden dem jeweiligen Vergleich unterzogenen Stellenwerte nicht übereinstimmen, so wird zu Schritt 47 übergegangen (K), bei dem in beschriebener Weise geprüft wird, ob eine weitere Zielwahlnummer in dem Zielwahlnummernspeicher 24 enthalten ist.

## Patentansprüche

1. Telekommunikations-Endgerät mit Zielwahltasten und zugeordnetem Rufnummernspeicher für eine Telekommunikationsanlage, in der die Rufnummer eines rufenden Teilnehmers zu dem Endgerät des gerufenen Teilnehmers übertragen wird, **dadurch gekennzeichnet,**
daß eine Vergleichsanordnung (23) zum Vergleich der jeweils übertragenen Rufnummer mit den im Rufnummerspeicher (22) enthaltenen Rufnummern vorgesehen ist, die bei positivem Vergleichsergebnis eine Anzeigevorrichtung (15, 27) aktiviert, welche derjenigen Zielwahltaste (14) zugeordnet ist, deren Rufnummer zu dem positiven Vergleichsergebnis geführt hat und daß die Anzeigevorrichtung nach dem Eingehen eines erfolglosen Anrufes aktiviert bleibt.

2. Endgerät nach Anspruch 1, dadurch **gekennzeichnet,** daß eine gemeinsame Anzeigevorrichtung (16) allen Zielwahltasten (14) zugeordnet ist und bei einem positiven Vergleichsergebnis aktiviert wird und daß der gemeinsamen Anzeigevorrichtung (16) eine Taste (17) zugeordnet ist, durch deren Betätigung die gespeicherte Auswahl der Aktivierung der einer Zielwahltaste (14) zugeordneten Anzeigevorrichtung (15) freigegeben wird.

3. Endgerät nach einem der vorhergehenden Ansprüche, dadurch **gekennzeichnet,** daß der Vergleich hinsichtlich der Stellenzahl zweier Rufnummern und danach hinsichtlich der Stellenwerte einer vorbestimmten Anzahl einander entsprechender Stellen erfolgt, welche die Endabschnitte der zu vergleichenden Rufnummern bilden.

4. Endgerät nach Anspruch 3, **dadurch gekennzeichnet**, daß bei positivem Vergleichsergebnis die übertragene Rufnummer gespeichert wird und daß die Ausgabe dieser gespeicherten Rufnummer durch ein Betätigen der Zielwahltaste (14) bewirkt wird, der die aufgrund des positiven Vergleichsergebnisses aktivierte Anzeigevorrichtung (15; 27) zugeordnet ist.

## Claims

1. Telecommunications terminal having speed dialling keys and an associated telephone number memory for a telecommunications system in which the telephone number of a calling subscriber is transmitted to the terminal of the called subscriber, characterized in that a comparison arrangement (23) is provided in order to compare the respectively transmitted telephone number with the telephone numbers contained in the telephone number memory (22), which arrangement (23) activates a display device (15, 27) if the comparison result is positive, which display device (15, 27) is assigned to that speed dialling key (14) whose telephone number has led to the positive comparison result, and in that the display device remains activated after the initiation of an unsuccessful call.

2. Terminal according to Claim 1, characterized in that a common display device (16) is assigned to all the speed dialling keys (14) and is activated in the event of a positive comparison result, and in that the common display device (16) is assigned a key (17) by means of whose operation the stored selection of the activation of the display device (15) which is assigned to a speed dialling key (14) is enabled.

3. Terminal according to one of the preceding claims, characterized in that the comparison is carried out with respect to the number of digits of two telephone numbers and then with respect to the digit values of a predetermined number of mutually corresponding digits which form the end sections of the telephone numbers to be compared.

4. Terminal according to Claim 3, characterized in that the transmitted telephone number is stored in the event of a positive comparison result, and in that this stored telephone number is output by operating the speed dialling key (14) which is assigned the display device (15; 27) which has been activated as a result of the positive comparison result.

## Revendications

1. Terminal de télécommunication comportant des touches de sélection de destinations et des mémoires associées de numéros d'appel pour une installation de télécommunication, dans laquelle le numéro d'appel d'un abonné appelant est transmis au terminal de l'abonné appelé, caractérisé par le fait
qu'il est prévu un dispositif comparateur (23) servant à comparer le numéro d'appel transmis aux numéros d'appel contenus dans la mémoire (22) de numéros d'appel, et, dans le cas d'un résultat positif de la comparaison, active un dispositif d'affichage (15,27), qui est associé à la touche de sélection de destination (14), dont le numéro d'appel a conduit au résultat positif de la comparaison et qu'après l'arrivée d'un appel sans succès, le dispositif d'affichage reste activé.

2. Terminal suivant la revendication 1, caractérisé par le fait qu'un dispositif d'affichage commun (16) est associé à toutes les touches de sélection de destination (14) et est activé dans le cas d'un résultat positif de la comparaison et qu'au dispositif d'affichage commun (16) est associée une touche (17), et dont l'actionnement libère la sélection mémorisée de l'activation du dispositif d'affichage (15) associé à la touche de sélection de destination (14).

3. Terminal suivant l'une des revendications précédentes, caractérisé par le fait que la comparaison porte sur le nombre des chiffres de deux numéros d'appel et ensuite sur les valeurs d'un nombre prédéterminé de chiffres qui se correspondent et qui forment les sections ou parties terminales des numéros d'appel devant être comparés.

4. Terminal suivant la revendication 3, caractérisé par le fait que dans le cas d'un résultat positif de la comparaison, le numéro d'appel transmis est mémorisé et que la délivrance de ce numéro d'appel mémorisé est réalisée au moyen d'un actionnement de la touche de sélection de destination (14), à laquelle est associé le dispositif d'affichage (15;27) qui est activé sur la base du résultat de comparaison positif.
